# EUROPEAN PATENT SPECIFICATION

(11) **EP 3 637 703 B1**
(45) Date of publication and mention of the grant of the patent: **01.06.2022**
(21) Application number: 18820573.6
(22) Date of filing: 27.04.2018
(51) Int. Cl.: H04L 12/801, H04L 29/06, H04L 12/807, H04L 12/911, H04L 29/08

(54) **MESSAGE TRANSMISSION METHODS AND PROXY SERVERS**
NACHRICHTENÜBERTRAGUNGSVERFAHREN UND PROXY-SERVER
PROCÉDÉS DE TRANSMISSION DE MESSAGES ET SERVEURS MANDATAIRES

(30) Priority: 23.06.2017 CN 201710488680
(43) Date of publication of application: 15.04.2020
(73) Proprietor: Huawei Technologies Co., Ltd., Longgang District Shenzhen, Guangdong 518129 (CN)
(72) Inventor: LI, Ji, Shenzhen Guangdong 518129 (CN); ZHU, Xia, Shenzhen Guangdong 518129 (CN)
(74) Representative: Maiwald Patent- und Rechtsanwaltsgesellschaft mbH
(86) International application number: PCT/CN2018/084947
(87) International publication number: WO 2018/233376

(56) References cited:
- WO-A1-2015/171023
- CN-A- 103 516 694
- CN-A- 105 490 933
- CN-A- 105 610 820
- US-A1- 2006 018 315
- US-A1- 2011 296 006
- LEYMANN C HEIDEMANN DEUTSCHE TELEKOM AG G LIANG CHINA MOBILE J ZUO L ZHENG HUAWEI N: "Integration of Bonding Tunnels and MPTCP; draft-zuo-banana-mptcp-integration-00.txt" , INTEGRATION OF BONDING TUNNELS AND MPTCP; DRAFT-ZUO-BANANA-MPTCP-INTEGRATION-00.TXT; INTERNET-DRAFT: BANANA, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 June 2017 (2017-06-08), pages 1-12, XP015120006, [retrieved on 2017-06-08]

## Description

### TECHNICAL FIELD

The present invention relates to the communications field, and in particular, to a packet transmission methods and proxy servers.

### BACKGROUND

A multipath transmission control protocol (Multipath Transport Control Protocol, MPTCP) is a transport layer protocol in which a plurality of paths are used for concurrent transmission, and can improve an end-to-end throughput rate and increase network utilization and redundancy. For the MPTCP protocol, refer to RFC6824.

The MPTCP is fully compatible with a transmission control protocol (Transport Control Protocol, TCP), and a TCP options header is added based on the TCP, to implement functions such as MPTCP link establishment, link removal, and data transmission. A typical application scenario of the MPTCP may be in an access network, or may be in an enterprise network.

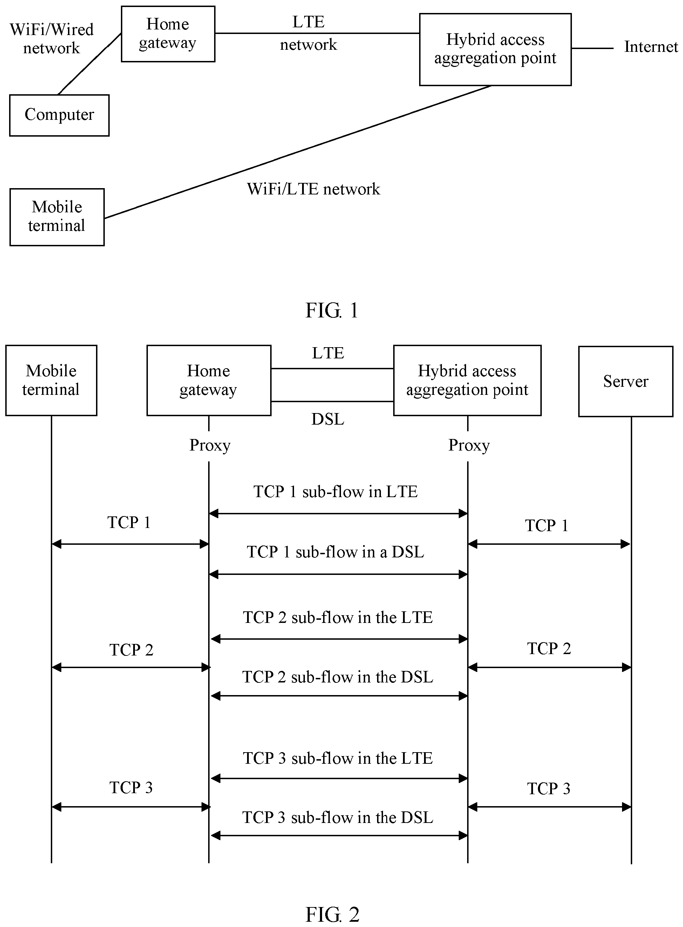

The access network is used as an example below for description. FIG. 1 is a schematic diagram of a service scenario of hybrid access in the prior art. A computer is connected to a home gateway (Home Gateway, HG) by using wireless fidelity (Wireless Fidelity, WiFi) or a wired network, and a mobile terminal is connected to a hybrid access aggregation point (Hybrid Access Aggregation Point, HAAP) by using a long term evolution (Long Term Evolution, LTE) network or WiFi.

In a hybrid access (Bonding Access, BA) scenario, there are a plurality of link connections such as a digital subscriber line (Digital Subscriber Line, DSL), a mobile communications network (for example, LTE), and WiFi. In other words, the HG and the HAAP may be connected by using the following manners: WiFi, a DSL, or LTE. The mobile terminal and the HAAP may be connected by using WiFi/LTE.

FIG. 2 is a schematic diagram of a signaling procedure of an MPTCP in a hybrid access scenario in the prior art. A mobile terminal is connected to a HAAP and a server by using an HG, and connection networks between the HG and the HAAP include LTE and a DSL. The mobile terminal sends three TCP packets to the server: a TCP 1, a TCP 2, and a TCP 3.

A TCP is used between the server and the HAAP; an MPTCP is used between the HAAP and the HG; and the TCP is used between the HG and the mobile terminal.

When an MPTCP is used in the BA scenario, multi-link bonding improves a throughput rate, and further, traffic is dynamically adjusted as a link status changes.

In the prior art, in an access network or an enterprise network, an IP packet into which a UDP packet is encapsulated needs to be transmitted. To pass through an MPTCP network, a UDP header needs to be replaced with an MPTCP header, and an MPTCP encapsulation structure (in other words, a structure of the MPTCO header) needs to be extended to add information used for routing in an IP packet to an MPTCP header with an extended structure. In other words, the UDP packet can pass through the MPTCP network by modifying a standard MPTCP encapsulation structure. Modifying the standard MPTCP encapsulation structure may cause a compatibility problem. For example, a receive end cannot recognize a modified MPTCP header, and consequently the UDP packet cannot be restored. The article of N. Leymann, C. Heidemann, Deutsche Telekom AG, G Liang, China Mobile, J. Zuo, L. Zeng, Huawei: "Integration of Bonding Tunnels and MPTC; draf-zuo-banana-mptcp-integration-00.txt", Integration of Bonding Tunnels and MPTCP; Draft-zuo-banana-mptcp-integration-OO.txt; Internet-Draft: Banana, Internet Engineering Task Force, IETF; Standardworkingdraft, Internet Society (ISOC) 4, Rue des Falaises CH-1205 Geneva, Switzerland, 8 June 2017 (2017-06-08), pages 1-12, XP015120006, refers to an integration of a tunnel bonding solution and MPTCP in a single system. The US 2011/296006 A1 refers to a cooperative bandwidth aggregation using multipath transport. The US 2006/018315 A1 refers to a method and an apparatus for providing fragmentation at a transport level along a transmission path.

### SUMMARY

The present invention is defined by the independent claims. Further embodiments are set forth in the dependent claims.

Embodiments of the present invention provide a packet transmission method, to resolve a technical problem of poor compatibility in the prior art, so that a complete UDP packet can be restored.

The embodiments of the present invention further provide a packet transmission method, to resolve the technical problem of poor compatibility in the prior art, so that a complete UDP packet can be restored.

The embodiments of the present invention further provide a proxy server, to resolve the technical problem of poor compatibility in the prior art, so that a complete UDP packet can be restored.

The embodiments of the present invention further provide a proxy server, to resolve the technical problem of poor compatibility in the prior art, so that a complete UDP packet can be restored.

According to a first aspect, an embodiment of the present invention provides a packet transmission method, where the method includes:
establishing, by a first proxy server, a multipath transmission control protocol (MPTCP) tunnel to a second proxy server, where the MPTCP tunnel includes a plurality of transmission control protocol (TCP) connections;
encapsulating, by the first proxy server after receiving an internet protocol (IP) packet into which a user datagram protocol (UDP) packet is encapsulated, the IP packet with an MPTCP header; and
sending, by the first proxy server by using the TCP connection in the MPTCP tunnel, the IP packet encapsulated with the MPTCP header.

With reference to the first aspect, in a second possible implementation, none of the plurality of TCP connections has an available window; and
the sending, by the first proxy server by using the TCP connection in the MPTCP tunnel, the IP packet encapsulated with the MPTCP header includes:
calculating, by the first proxy server, a ratio of current congestion windows of the plurality of TCP connections based on a quantity of current congestion windows of each TCP connection;
increasing, by the first proxy server, a quantity of the current congestion windows of the plurality of TCP connections based on the ratio of the current congestion windows; and
sending, by the first proxy server by using a TCP connection with an increased quantity of current congestion windows, the IP packet encapsulated with the MPTCP header.

With reference to the first aspect, in a first case of the second possible implementation, the sending, by the first proxy server by using a TCP connection with an increased quantity of current congestion windows, the IP packet encapsulated with the MPTCP header includes:
determining, by the first proxy server based on priorities of the plurality of TCP connections, a TCP connection for sending the IP packet; and
sending, by the first proxy server by using the TCP connection for sending the IP packet, the IP packet encapsulated with the MPTCP header.

With reference to the first aspect, in a third possible implementation, the plurality of TCP connections have available windows; and
the sending, by the first proxy server by using the TCP connection in the MPTCP tunnel, the IP packet encapsulated with the MPTCP header includes:
determining, by the first proxy server based on priorities of the TCP connections that have the available windows, a TCP connection for transmitting the IP packet; and
sending, by the first proxy server by using the TCP connection for transmitting the IP packet, the IP packet encapsulated with the MPTCP header.

With reference to the first aspect, in a fourth possible implementation, the encapsulating, by the first proxy server, the IP packet with an MPTCP header includes:
when a length of the IP packet into which the UDP packet is encapsulated is greater than a maximum segment size MSS of the MPTCP tunnel, fragmenting, by the first proxy server based on the MSS, the IP packet into which the UDP packet is encapsulated, to obtain fragmented IP packets; and
encapsulating, by the first proxy server, the fragmented IP packets with MPTCP headers.

With reference to the first aspect, in a fifth possible implementation, the first proxy server is a hybrid access aggregation point HAAP, and the second proxy server is a home gateway.

With reference to the first aspect, in a sixth possible implementation, the first proxy server and the second proxy server are access routers of different enterprise networks.

With reference to the first aspect, in the foregoing possible implementations, the method further includes:
when a packet loss occurs on a TCP connection, decreasing, by the first proxy server, a quantity of current congestion windows of the TCP connection on which the packet loss occurs.

According to a second aspect, an embodiment of the present invention provides a packet transmission method, where the method includes:
establishing, by a second proxy server, a multipath transmission control protocol (MPTCP) tunnel to a first proxy server, where the MPTCP tunnel includes a plurality of transmission control protocol (TCP) connections;
receiving, by the second proxy server by using the TCP connection in the MPTCP tunnel, internet protocol (IP) packets encapsulated with MPTCP headers; wherein UDP packets are encapsulated in the IP packets; and
ranking, by the second proxy server, the IP packets based on the MPTCP headers, and performing parsing based on IP packet headers of the IP packets to obtain the UDP packets.

With reference to the second aspect, in a first possible implementation, the performing parsing based on an IP packet header of the IP packet to obtain a UDP packet includes:
removing the MPTCP headers of the ranked IP packets to obtain fragmented IP packets; and
after reassembling the fragmented IP packets, performing parsing based on an IP packet header of a reassembled IP packet to obtain the UDP packet.

According to a third aspect, an embodiment of the present invention provides a proxy server, where the proxy server includes an establishment module, an encapsulation module, and a sending module; where
the establishment module is configured to establish a multipath transmission control protocol (MPTCP) tunnel to a second proxy server, where the MPTCP tunnel includes a plurality of transmission control protocol (TCP) connections;
the encapsulation module is configured to encapsulate, after receiving an internet protocol (IP) packet into which a user datagram protocol (UDP) packet is encapsulated, the IP packet with an MPTCP header; and
the sending module is configured to send, by using the TCP connection in the MPTCP tunnel, the IP packet encapsulated with the MPTCP header.

With reference to the third aspect, in a second possible implementation, none of the plurality of TCP connections has an available window; and
the sending module is specifically configured to: calculate a ratio of current congestion windows of the plurality of TCP connections based on a quantity of current congestion windows of each TCP connection;
increase a quantity of the current congestion windows of the plurality of TCP connections based on the ratio of the current congestion windows; and
send, by using a TCP connection with an increased quantity of current congestion windows, the IP packet encapsulated with the MPTCP header.

With reference to the third aspect, in a first case of the second possible implementation, the sending module is specifically configured to: determine, based on priorities of the plurality of TCP connections, a TCP connection for sending the IP packet; and send, by using the TCP connection for sending the IP packet, the IP packet encapsulated with the MPTCP header.

With reference to the third aspect, in a third possible implementation, the plurality of TCP connections have available windows; and
the sending module is specifically configured to: determine, based on priorities of the TCP connections that have the available windows, a TCP connection for transmitting the IP packet; and send, by using the TCP connection for transmitting the IP packet, the IP packet encapsulated with the MPTCP header.

With reference to the third aspect, in a fourth possible implementation, the encapsulation module is specifically configured to: when a length of the IP packet into which the UDP packet is encapsulated is greater than a maximum segment size MSS of the MPTCP tunnel, fragment, based on the MSS, the IP packet into which the UDP packet is encapsulated, to obtain fragmented IP packets; and encapsulate the fragmented IP packets with MPTCP headers.

With reference to the third aspect, in a fifth possible implementation, the first proxy server is a hybrid access aggregation point HAAP, and the second proxy server is a home gateway.

With reference to the third aspect, in a sixth possible implementation, the first proxy server and the second proxy server are access routers of different enterprise networks.

With reference to the third aspect, in the foregoing possible implementations, the proxy server further includes a control module, configured to: when a packet loss occurs on a TCP connection, decrease a quantity of current congestion windows of the TCP connection on which the packet loss occurs. According to a fourth aspect, an embodiment of the present invention provides a proxy server, where the proxy server includes an establishment module, a receiving module, and a parsing module; where
the establishment module is configured to establish a multipath transmission control protocol (MPTCP) tunnel to a first proxy server, where the MPTCP tunnel includes a plurality of transmission control protocol (TCP) connections;
the receiving module is configured to receive, by using the TCP connection in the MPTCP tunnel, internet protocol (IP) packets encapsulated with MPTCP headers; wherein UDP packets are encapsulated in the IP packets; and
the parsing module is configured to rank the IP packets based on the MPTCP headers, and perform parsing based on IP packet headers of the IP packets to obtain the UDP packets.

With reference to the fourth aspect, in a second possible implementation, the parsing module is specifically configured to: remove the MPTCP headers of the ranked IP packets to obtain fragmented IP packets; and after reassembling the fragmented IP packets, perform parsing based on an IP packet header of a reassembled IP packet to obtain the UDP packet.

It can be learned from the foregoing technical solutions that the first proxy server establishes the MPTCP tunnel to the second proxy server, where the MPTCP tunnel includes the plurality of TCP connections; the first proxy server encapsulates, after receiving the IP packet into which the UDP packet is encapsulated, the IP packet with the MPTCP header; and the first proxy server sends, by using the TCP connection in the MPTCP tunnel, the IP packet encapsulated with the MPTCP header. A standard MPTCP encapsulation structure is used during transmission of the IP packet, so that the technical problem of poor compatibility is resolved, and therefore a complete UDP packet can be restored.

### BRIEF DESCRIPTION OF DRAWINGS

The present invention can be better understood from the following descriptions of specific implementations of the present invention with reference to the accompanying drawings, and same or similar reference numerals represent same or similar features.
FIG. 1 is a schematic diagram of a service scenario of an access network in the prior art;
FIG. 2 is a schematic diagram of a signaling procedure of an MPTCP in a hybrid access scenario in the prior art;
FIG. 3 is a schematic flowchart of a packet transmission method according to an embodiment of the present invention;
FIG. 4 is a schematic flowchart of sending an IP packet encapsulated with an MPTCP header according to an embodiment of the present invention;
FIG. 5 is a schematic diagram of scheduling a resource on a TCP connection to transmit an IP packet according to an embodiment of the present invention;
FIG. 6 is a schematic diagram of fragmenting an IP packet based on an MSS according to an embodiment of the present invention;
FIG. 7 is a schematic flowchart of a packet transmission method according to another embodiment of the present invention;
FIG. 8 is a schematic diagram of transmitting a UDP packet by using an MPTCP tunnel according to an embodiment of the present invention;
FIG. 9 is a schematic structural diagram of a proxy server according to an embodiment of the present invention;
FIG. 10 is a schematic structural diagram of a proxy server according to another embodiment of the present invention; and
FIG. 11 is a schematic structural diagram of a proxy server according to still another embodiment of the present invention.

### DESCRIPTION OF EMBODIMENTS

In the embodiments of the present invention, an MPTCP tunnel is first established between a first proxy server and a second proxy server. Then, after receiving an IP packet into which a UDP packet is encapsulated, the first proxy server does not change an MPTCP encapsulation structure, but encapsulates the IP packet with an MPTCP header. Finally, the IP packet encapsulated with the MPTCP header is sent by using a TCP connection in the MPTCP tunnel. Because a receive end can identify a standard MPTCP encapsulation structure, a technical problem of poor compatibility is resolved, and therefore a complete UDP packet can be restored.

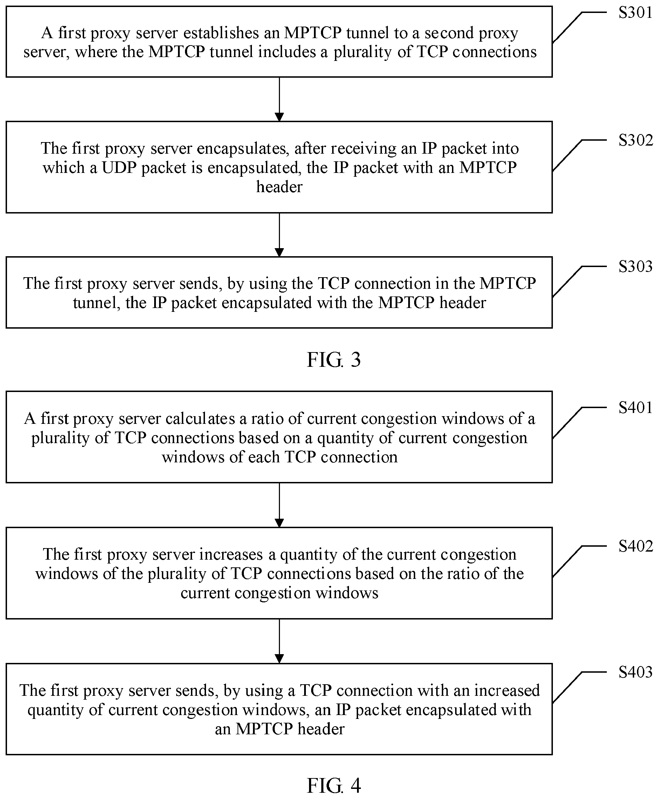

FIG. 3 is a schematic flowchart of a packet transmission method according to an embodiment of the present invention. Steps in FIG. 3 are applied to a transmit end, namely, a first proxy server, for sending an IP packet encapsulated with an MPTCP header. The method specifically includes the following steps.

S301. The first proxy server establishes an MPTCP tunnel to a second proxy server, where the MPTCP tunnel includes a plurality of TCP connections.

An MPTCP may be applied to an access network, and may also be applied to an enterprise network. The access network is all devices between a backbone network and a mobile terminal. The enterprise network is a network that covers an enterprise scope. Data can be directly transmitted between enterprises by using the enterprise network.

The following separately describes applications of the MPTCP in different scenarios.

When an application scenario of the MPTCP is in the access network, an MPTCP tunnel may be established between a mobile terminal and a server. The MPTCP tunnel is established to transmit an IP packet encapsulated with an MPTCP header.

A TCP is used between the mobile terminal and a gateway; an MPTCP is used between an HG and a HAAP; and the TCP is used between the HAAP and the server. In this case, an MPTCP tunnel may be specifically established between the HAPP and the gateway. When the gateway is an HG, the MPTCP tunnel is established between the HAPP and the HG Correspondingly, the first proxy server may be a HAAP, and the second proxy server may be an HG.

When an application scenario of the MPTCP is in the enterprise network, access routers between enterprise networks use the MPTCP. In this case, an MPTCP tunnel may be established between the access routers between the enterprise networks. The first proxy server may be a first access router corresponding to one enterprise, and the second proxy server may be a second access router corresponding to another enterprise. In other words, the first proxy server and the second proxy server are access routers of different enterprise networks.

Certainly, in another network, when the MPTCP is used between network devices, an MPTCP tunnel may be established between the network devices, to transmit the IP packet.

S302. The first proxy server encapsulates, after receiving an IP packet into which a UDP packet is encapsulated, the IP packet with an MPTCP header.

To transmit, by using the TCP connection in the MPTCP tunnel, the IP packet into which the UDP packet is encapsulated, the first proxy server needs to encapsulate the IP packet with the MPTCP header. After receiving the IP packet encapsulated with the MPTCP header, a receive end may rank the received IP packet based on the MPTCP header, to obtain the UDP packet.

S303. The first proxy server sends, by using the TCP connection in the MPTCP tunnel, the IP packet encapsulated with the MPTCP header.

The MPTCP tunnel includes the plurality of TCP connections. One or more TCP connections may be selected from the plurality of TCP connections, and the IP packet encapsulated with the MPTCP header is sent by using the selected TCP connection. In this specification, the plurality of TCP connections are two or more TCP connections, including two TCP connections.

A first server and a second server may transmit data by using the plurality of TCP connections, and the TCP connections may include network links such as a DSL, a mobile communications network, and/or WiFi. Therefore, the MPTCP tunnel is applicable to networks such as the DSL, the mobile communications network, and the WiFi.

In this embodiment of the present invention, the MPTCP tunnel is first established between the first proxy server and the second proxy server, and the first proxy server encapsulates the IP packet with the MPTCP header. Then, the first proxy server sends, by using the TCP connection in the MPTCP tunnel, the IP packet encapsulated with the MPTCP header. Because the IP packet is encapsulated by using a standard MPTCP structure, a technical problem of poor compatibility is resolved, and therefore a complete UDP packet can be restored.

In the TCP connection, data is carried by a congestion window. The congestion window includes a window in transmission and an available window. The window in transmission is a window in which carried data is being transmitted, and the available window is a window in which carried data is not being transmitted currently. When the TCP connection has an available window, it indicates that the TCP connection has an available resource. When the TCP connection has no available window, it indicates that the TCP connection has no available resource.

In an optional embodiment of the present invention, if none of the plurality of TCP connections included in the MPTCP tunnel has an available window, it indicates that none of the TCP connections has an available resource.

FIG. 4 is a schematic flowchart of sending an IP packet encapsulated with an MPTCP header according to an embodiment of the present invention. Specifically, the sending an IP packet encapsulated with an MPTCP header includes the following steps.

401. A first proxy server calculates a ratio of current congestion windows of a plurality of TCP connections based on a quantity of current congestion windows of each TCP connection.

First, the quantity of current congestion windows of each TCP connection is determined. For example, a quantity of current congestion windows of a first TCP connection is 10, and a quantity of current congestion windows of a second TCP connection is 6.

Then, the ratio of the current congestion windows of the plurality of TCP connections is calculated. For example, neither the first TCP connection nor the second TCP connection has an available window. A ratio of the current congestion windows of the first TCP connection to the current congestion windows of the second TCP connection is 10/6.

402. The first proxy server increases a quantity of the current congestion windows of the plurality of TCP connections based on the ratio of the current congestion windows.

The quantity of the current congestion windows of the TCP connections is increased based on the previously calculated ratio of the current congestion windows. For example, the ratio of the current congestion windows of the first TCP connection to the current congestion windows of the second TCP connection is 10/6. If the quantity of the current congestion windows of the first TCP connection is increased by five windows, the quantity of the current congestion windows of the second TCP connection is increased by three windows.

In this way, a quantity of available windows of the first TCP connection is 5, and a quantity of available windows of the second TCP connection is 3. Apparently, after the quantity of the current congestion windows is increased, the ratio of the current congestion windows remains unchanged.

403. The first proxy server sends, by using a TCP connection with an increased quantity of current congestion windows, an IP packet encapsulated with an MPTCP header.

After the quantity of the current congestion windows is increased, each TCP connection has an available window, so that the IP packet encapsulated with the MPTCP header may be sent in the available window of the TCP connection.

In this embodiment of the present invention, the quantity of the current congestion windows of the plurality of TCP connections is increased based on the ratio of the current congestion windows. In this way, when the TCP connection has no available window, the quantity of the current congestion windows of the TCP connection may be increased, to send the IP packet encapsulated with the MPTCP header.

In an optional embodiment of the present invention, none of the plurality of TCP connections has an available window. After the quantity of the current congestion windows of the plurality of TCP connections is increased, the first proxy server may determine, based on preset priorities of the TCP connections, a TCP connection for sending the IP packet. Then, the IP packet encapsulated with the MPTCP header is sent by using the TCP connection for sending the IP packet.

For example, neither a first TCP connection nor a second TCP connection has an available window, and a priority of the first TCP connection is higher than a priority of the second TCP connection. The first proxy server may first determine the first TCP connection as the TCP connection for sending the IP packet, and then send, through an increased current congestion window of the first TCP connection, the IP packet encapsulated with the MPTCP header.

In an optional embodiment of the present invention, none of the plurality of TCP connections has an available window. After the quantity of the current congestion windows of the plurality of TCP connections is increased, the first proxy server may randomly determine a TCP connection as a TCP connection for sending the IP packet. Then, the IP packet encapsulated with the MPTCP header is sent by using the TCP connection for sending the IP packet.

In an optional embodiment of the present invention, when a packet loss occurs on a TCP connection for transmitting an IP packet, it indicates that the current TCP connection is unstable, and the first proxy server may decrease a quantity of current congestion windows of the TCP connection on which the packet loss occurs, to reduce a packet loss possibility.

In an optional embodiment of the present invention, if the plurality of TCP connections included in the MPTCP tunnel have available windows, it indicates that there is a TCP connection that has an available resource.

First, in the plurality of TCP connections, the first proxy server may determine, based on preset priorities of the TCP connections and from TCP connections that have available windows, the TCP connection for transmitting the IP packet. Then, the IP packet encapsulated with the MPTCP header is sent by using the TCP connection for transmitting the IP packet.

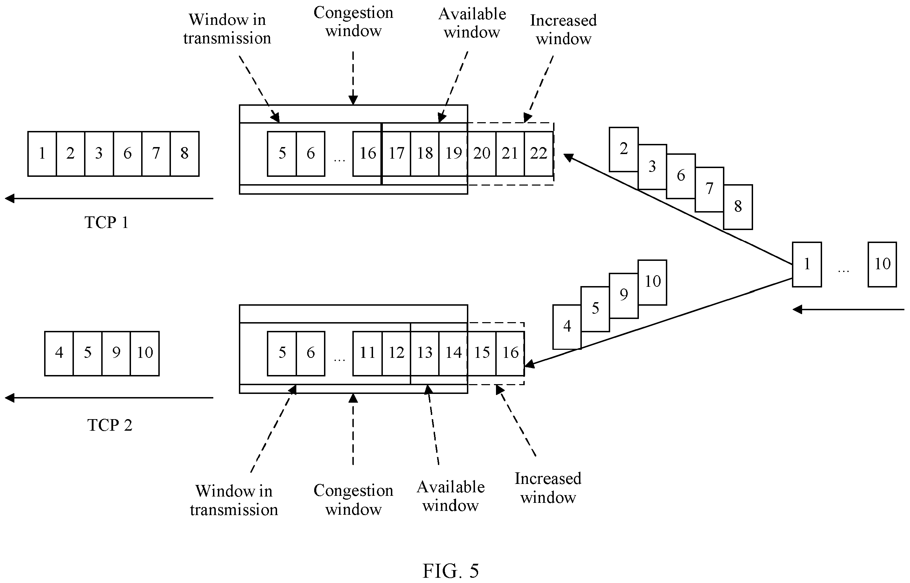

Transmission of an encapsulated IP packet based on resource scheduling on a TCP connection is described in detail below with reference to FIG. 5. FIG. 5 is a schematic diagram of scheduling a resource on a TCP connection to transmit an IP packet according to an embodiment of the present invention.

There are two TCP connections between a first proxy server and a second proxy server: a TCP 1 and a TCP 2.

After an MPTCP tunnel is established between the first proxy server and the second proxy server, an IP flow has a corresponding TCP sub-flow on each of the TCP 1 and the TCP 2. A priority of the TCP 1 is preset to be higher than a priority of the TCP 2.

The TCP connections include congestion windows. A quantity of available windows in current congestion windows of the TCP 1 and a quantity of available windows in current congestion windows of the TCP 2 each are zero, in other words, neither the TCP 1 nor the TCP 2 has an available resource.

To ensure normal transmission of the IP flow, a quantity of current congestion windows needs to be increased.

First, a ratio, namely 15/10, of the current congestion windows of the TCP 1 to the current congestion windows of the TCP 2 is calculated based on a quantity of current congestion windows of each link.

Second, the quantity of current congestion windows of the TCP 1 and the quantity of current congestion windows of the TCP 2 are increased based on the ratio of 15/10. For example, the quantity of windows of the TCP 1 is increased by 3, and the quantity of windows of the TCP 2 is increased by 2. A quantity of increased congestion windows of the TCP 1 is equal to 18, and a quantity of increased congestion windows of the TCP 2 is equal to 12.

Finally, data is transmitted based on the increased current congestion windows. Packets 6, 7, and 8 may be scheduled to the TCP 1, and packets 9 and 10 may be scheduled to the TCP 2.

If there is an available resource on the TCP connections, in other words, quantities of available windows of the TCP connections are not zero, an IP packet is scheduled to the TCP connections based on priorities of the TCP connections.

In other words, in one case, if the quantity of available windows of either the TCP 1 or the TCP 2 is not zero, the TCP 1 has an available resource, and the TCP 2 also has an available resource. In this case, scheduling may be performed based on the priorities of the TCP connections. Because the priority of the TCP 1 is higher than the priority of the TCP 2, the IP packet is first scheduled to the available resource of the TCP 1, and then scheduled to the available resource of the TCP 2. A specific data volume of scheduling the IP packet is determined based on the available windows of the TCP connections.

In an optional embodiment of the present invention, considering that an IP packet into which a UDP packet is encapsulated is too long, transmission of the IP packet cannot be completed at a time in a normal data block.

In this case, the first proxy server may fragment, based on a maximum segment size (Max Segment Size, MSS) of an MPTCP tunnel, the IP packet into which the UDP packet is encapsulated, to obtain fragmented IP packets. Finally, the fragmented IP packets are encapsulated with MPTCP headers.

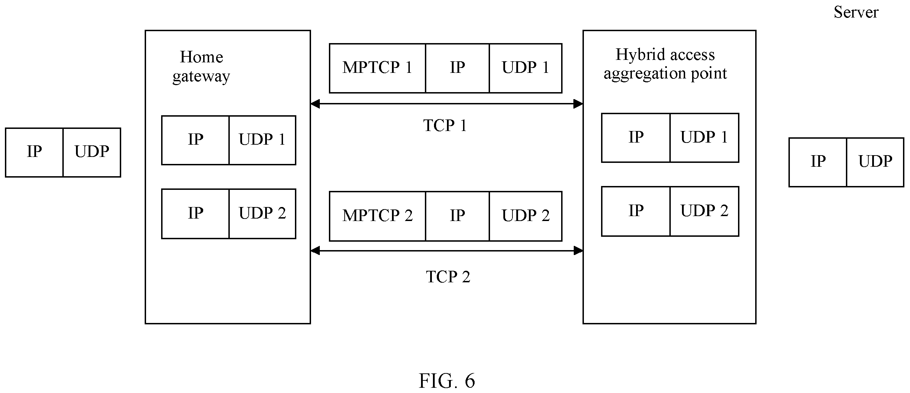

FIG. 6 is a schematic diagram of fragmenting an IP packet based on an MSS according to an embodiment of the present invention. After a server receives a packet carried by an IP, because a length of an IP packet into which a UDP packet is encapsulated is greater than an MSS of an MPTCP tunnel, the server needs to fragment the IP packet into which the UDP packet is encapsulated.

For example, if the length of the IP packet into which the UDP packet is encapsulated is 1500, and the MSS is 1000, the IP packet into which the UDP is encapsulated is fragmented into two packets: 1000 and 520. One IP packet is fragmented into two IP packets. Because each IP packet has an IP header, a total length of the two packets expands by 20 bytes.

In other words, in FIG. 6, the IP packet into which the UDP packet is encapsulated is fragmented into a UDP 1 carried by the IP and a UDP 2 carried by the IP. The two fragmented IP packets are scheduled to a TCP, for example, the UDP 1 carried by the IP is scheduled to a TCP 1, and the UDP 2 carried by the IP is scheduled to a TCP 2.

On an HG, a complete IP packet is restored from a TCP byte stream based on a length field of an IP header. In other words, the UDP 1 carried by the IP and the UDP 2 carried by the IP are obtained.

After a sequence of IP packets is determined by a user based on an MPTCP, the UDP 1 carried by the IP and the UDP 2 carried by the IP are reassembled to obtain the UDP packet.

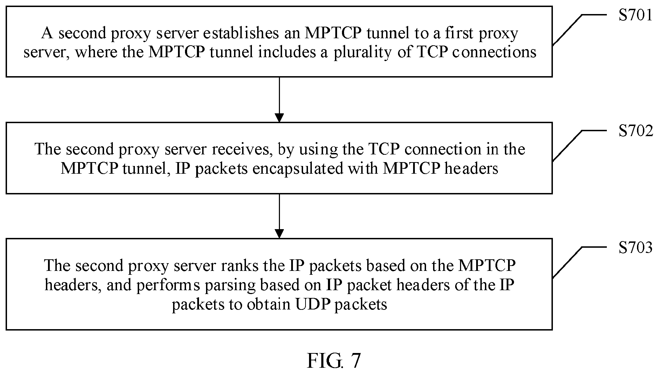

FIG. 7 is a schematic flowchart of a packet transmission method according to another embodiment of the present invention. Steps in FIG. 7 are applied to a received end, namely, a second proxy server, for receiving an IP packet encapsulated with an MPTCP header. The method specifically includes the following steps.

S701. The second proxy server establishes an MPTCP tunnel to a first proxy server, where the MPTCP tunnel includes TCP connections.

An MPTCP may be applied to an access network, and may also be applied to an enterprise network. The access network is all devices between a backbone network and a mobile terminal. The enterprise network is a network that covers an enterprise scope. Data can be directly transmitted between enterprises by using the enterprise network.

The following separately describes applications of the MPTCP in different scenarios.

When an application scenario of the MPTCP is in the access network, an MPTCP tunnel may be established between a mobile terminal and a server. The MPTCP tunnel is established to transmit a UDP packet.

When an application scenario of the MPTCP is in the enterprise network, access routers between enterprise networks use the MPTCP. In this case, an MPTCP tunnel may be established between the access routers between the enterprise networks. The first proxy server may be a first access router corresponding to one enterprise, and the second proxy server may be a second access router corresponding to another enterprise. In other words, the first proxy server and the second proxy server are access routers of different enterprise networks.

Certainly, in another network, when the MPTCP is used between network devices, an MPTCP tunnel may be established between the network devices, to transmit an IP packet.

S702. The second proxy server receives, by using the TCP connection in the MPTCP tunnel, IP packets encapsulated with MPTCP headers.

The IP packet that is sent by a transmit end and is encapsulated with the MPTCP header may be received by using the TCP connection in the MPTCP tunnel.

S703. The second proxy server ranks the IP packets based on the MPTCP headers, and performs parsing based on IP packet headers of the IP packets to obtain UDP packets.

TCP connections for transmitting IP packets are different, and sequences of receiving the IP packets are different. A plurality of IP packets encapsulated with MPTCP headers are received. The received IP packets may be ranked based on the MPTCP headers, and then parsing is performed based on IP packet headers of the IP packets to obtain UDP packets.

In this embodiment of the present invention, the second proxy server establishes the MPTCP tunnel to the first proxy server. After receiving IP packets through the MPTCP tunnel, the second proxy server ranks the IP packets based on MPTCP headers, to finally obtain UDP packets. A standard MPTCP encapsulation structure is used during transmission of the IP packet, so that a technical problem of poor compatibility is resolved, and therefore a complete UDP packet can be restored on a receive end.

In an optional embodiment of the present invention, considering that an IP packet into which a UDP packet is encapsulated is too long, transmission of the IP packet cannot be completed at a time in a normal data block. Therefore, the IP packet into which the UDP packet is encapsulated is fragmented at a transmit end based on an MSS of the MPTCP tunnel. In this case, the IP packets received by the receive end needs to be reassembled.

Specifically, the second proxy server removes the MPTCP headers of the ranked IP packets to obtain fragmented IP packets. The fragmented IP packets are the IP packet before reassembly. Finally, the fragmented IP packets are reassembled, and then parsing is performed based on an IP packet header of a reassembled IP packet to obtain the UDP packet.

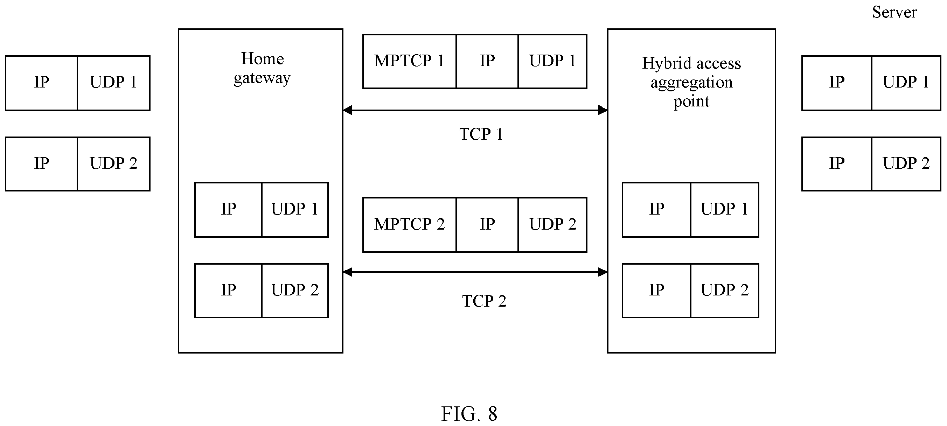

FIG. 8 is a schematic diagram of transmitting a UDP packet by using an MPTCP tunnel according to an embodiment of the present invention.

A first proxy server may be a HAAP, and a second proxy server may be an HG First, an MPTCP tunnel is established between the HAAP and the HG

UDP packets that need to be transmitted by a server end include a UDP 1 and a UDP 2.

In the HAAP, after an IP packet is encapsulated with an MPTCP header, an encapsulated IP packet is scheduled to a TCP connection and passes through the MPTCP tunnel. The encapsulated IP packet includes an MPTCP packet header, an IP packet header, and a UDP.

In the HG, after the MPTCP header of the IP packet received from the MPTCP tunnel is removed, ranking is performed, and the packet UDP 1 is ranked before the packet UDP 2.

Based on the IP packet header, the packet UDP 1 is parsed first, and then the packet UDP 2 is parsed, to finally obtain the UDP 1 and the UDP 2.

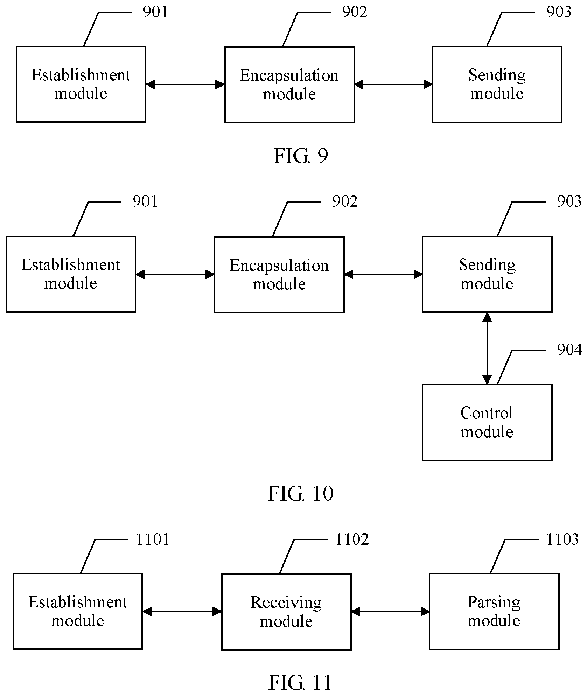

FIG. 9 is a schematic structural diagram of a proxy server according to an embodiment of the present invention. The proxy server in FIG. 9 may be applied to a transmit end for transmitting an IP packet encapsulated with an MPTCP header. Specifically, the proxy server includes an establishment module 901, an encapsulation module 902, and a sending module 903.

The establishment module 901 is configured to establish an MPTCP tunnel to a second proxy server, and the MPTCP tunnel includes TCP connections.

An MPTCP may be applied to an access network, and may also be applied to an enterprise network. The access network is all devices between a backbone network and a mobile terminal. The enterprise network is a network that covers an enterprise scope. Data can be directly transmitted between enterprises by using the enterprise network.

The following separately describes applications of the MPTCP in different scenarios.

When an application scenario of the MPTCP is in the access network, an MPTCP tunnel may be established between a mobile terminal and a server. The MPTCP tunnel is established to transmit an IP packet encapsulated with an MPTCP header.

A TCP is used between the mobile terminal and a gateway; an MPTCP is used between an HG and a HAAP; and the TCP is used between the HAAP and the server. In this case, an MPTCP tunnel may be specifically established between the HAPP and the gateway. When the gateway is an HG, the MPTCP tunnel is established between the HAPP and the HG. Correspondingly, a first proxy server may be a HAAP, and the second proxy server may be an HG

When an application scenario of the MPTCP is in the enterprise network, access routers between enterprise networks use the MPTCP. In this case, an MPTCP tunnel may be established between the access routers between the enterprise networks. The first proxy server may be a first access router corresponding to one enterprise, and the second proxy server may be a second access router corresponding to another enterprise. In other words, the first proxy server and the second proxy server are access routers of different enterprise networks.

Certainly, in another network, when the MPTCP is used between network devices, an MPTCP tunnel may be established between the network devices, to transmit the IP packet.

The encapsulation module 902 is configured to encapsulate, after receiving an IP packet into which a UDP packet is encapsulated, the IP packet with an MPTCP header.

To transmit, by using the TCP connection in the MPTCP tunnel, the IP packet into which the UDP packet is encapsulated, the encapsulation module 902 needs to encapsulate the IP packet with the MPTCP header. After receiving the IP packet encapsulated with the MPTCP header, a receive end may rank the received IP packet based on the MPTCP header, to obtain the UDP packet.

The sending module 903 is configured to send, by using the TCP connection in the MPTCP tunnel, the IP packet encapsulated with the MPTCP header.

The MPTCP tunnel includes a plurality of TCP connections. The sending module 903 may select one or more TCP connections from the plurality of TCP connections, and send, by using the selected TCP connection, the IP packet encapsulated with the MPTCP header. In this specification, the plurality of TCP connections are two or more TCP connections, including two TCP connections.

A first server and a second server may transmit data by using the plurality of TCP connections, and the TCP connections may include network links such as a DSL, a mobile communications network, and/or WiFi. Therefore, the MPTCP tunnel is applicable to networks such as the DSL, the mobile communications network, and the WiFi.

In this embodiment of the present invention, the establishment module 901 first establishes the MPTCP tunnel between the first proxy server and the second proxy server, and the encapsulation module 902 encapsulates the IP packet with the MPTCP header. Then, the sending module 903 sends, by using the TCP connection in the MPTCP tunnel, the IP packet encapsulated with the MPTCP header. Because the IP packet is encapsulated by using a standard MPTCP structure, a technical problem of poor compatibility is resolved, and therefore a complete UDP packet can be restored.

In the TCP connection, data is carried by a congestion window. The congestion window includes a window in transmission and an available window. The window in transmission is a window in which carried data is being transmitted, and carried data is not being transmitted in the available window. When the TCP connection has an available window, it indicates that the TCP connection has an available resource. When the TCP connection has no available window, it indicates that the TCP connection has no available resource.

In an optional embodiment of the present invention, if none of the plurality of TCP connections included in the MPTCP tunnel has an available window, it indicates that none of the TCP connections has an available resource.

The sending module 903 is specifically configured to: calculate a ratio of current congestion windows of the plurality of TCP connections based on a quantity of current congestion windows of each TCP connection; increase a quantity of the current congestion windows of the plurality of TCP connections based on the ratio of the current congestion windows; and send, by using a TCP connection with an increased quantity of current congestion windows, the IP packet encapsulated with the MPTCP header.

In this embodiment of the present invention, the sending module 903 increases a quantity of the current congestion windows of the plurality of TCP connections based on the ratio of the current congestion windows. In this way, when the TCP connection has no available window, the quantity of current congestion windows of the TCP connection may be increased, to send the IP packet encapsulated with the MPTCP header.

In an optional embodiment of the present invention, none of the plurality of TCP connections has an available window, and the sending module 903 is specifically configured to: determine, based on priorities of the plurality of TCP connections, a TCP connection for sending the IP packet, and then send, by using the determined TCP connection for sending the IP packet, the IP packet encapsulated with the MPTCP header.

In an optional embodiment of the present invention, none of the plurality of TCP connections has an available window, and a TCP connection may be randomly determined.

The sending module 903 is specifically configured to: randomly determine, from the plurality TCP connections, a TCP connection for sending the IP packet, and then send, by using the determined TCP connection for sending the IP packet, the IP packet encapsulated with the MPTCP header.

FIG. 10 is a schematic structural diagram of a proxy server according to another embodiment of the present invention. A control module 904 is added based on the proxy server in FIG. 9.

In an optional embodiment of the present invention, when a packet loss occurs on a TCP connection for transmitting an IP packet, it indicates that the current TCP connection is unstable.

The control module 904 is configured to: when a packet loss occurs on a TCP connection for transmitting an IP packet, decrease a quantity of current congestion windows of the TCP connection on which the packet loss occurs.

In an optional embodiment of the present invention, if the plurality of TCP connections included in the MPTCP tunnel have available windows, it indicates that there is a TCP connection that has an available resource.

The sending module 903 is specifically configured to: determine, based on priorities of the TCP connections that have the available windows, a TCP connection for transmitting the IP packet, and finally send, by using the TCP connection for transmitting the IP packet, the IP packet encapsulated with the MPTCP header.

In an optional embodiment of the present invention, considering that an IP packet into which a UDP packet is encapsulated is too long, transmission of the IP packet cannot be completed at a time in a normal data block.

The encapsulation module 902 is specifically configured to: when the length of the IP packet into which the UDP packet is encapsulated is greater than an MSS of the MPTCP tunnel, fragment, based on the MSS, the IP packet into which the UDP packet is encapsulated, to obtain fragmented IP packets; and encapsulate the fragmented IP packets with MPTCP headers.

FIG. 11 is a schematic structural diagram of a proxy server according to still another embodiment of the present invention. The proxy server in FIG. 11 may be applied to a receive end for receiving an IP packet encapsulated with an MPTCP header. Specifically, the proxy server includes an establishment module 1101, a receiving module 1102, and a parsing module 1103.

The establishment module 1101 is configured to establish an MPTCP tunnel to a first proxy server, and the MPTCP tunnel includes a plurality of TCP connections.

An MPTCP may be applied to an access network, and may also be applied to an enterprise network. Certainly, in another network, when the MPTCP is used between network devices, an MPTCP tunnel may be established between the network devices, to transmit an IP packet.

The receiving module 1102 is configured to receive, by using the TCP connection in the MPTCP tunnel, the IP packets encapsulated with the MPTCP headers.

The IP packet that is sent by a transmit end and is encapsulated with the MPTCP header may be received by using the TCP connection in the MPTCP tunnel.

The parsing module 1103 is configured to rank the IP packets based on the MPTCP headers, and perform parsing based on IP packet headers of the IP packets to obtain UDP packets.

TCP connections for transmitting IP packets are different, and sequences of receiving the IP packets are different. A plurality of IP packets encapsulated with MPTCP headers are received. The received IP packets may be ranked based on the MPTCP headers, and then parsing is performed based on IP packet headers of the IP packets to obtain UDP packets.

In this embodiment of the present invention, the establishment module 1101 establishes the MPTCP tunnel between the first proxy server and a second proxy server, the receiving module 1102 receives IP packets through the MPTCP tunnel, and the parsing module 1103 ranks the IP packets based on MPTCP headers, to finally obtain UDP packets. A standard MPTCP encapsulation structure is used during transmission of the IP packet, so that a technical problem of poor compatibility is resolved, and therefore a complete UDP packet can be restored on a receive end.

In an optional embodiment of the present invention, considering that an IP packet into which a UDP packet is encapsulated is too long, transmission of the IP packet cannot be completed at a time in a normal data block. Therefore, the IP packet into which the UDP packet is encapsulated is fragmented at a transmit end based on an MSS of the MPTCP tunnel. In this case, the IP packets received by the receive end needs to be reassembled.

The parsing module 1102 is specifically configured to: remove the MPTCP headers of the ranked IP packets to obtain fragmented IP packets; and after reassembling the fragmented IP packets, perform parsing based on an IP packet header of a reassembled IP packet to obtain the UDP packet.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions.

When the computer program instructions are loaded and executed on a computer, all or some of the procedures or functions according to the embodiments of the present invention are generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center wiredly (for example, a coaxial cable, an optical fiber, or a digital subscriber line (DSL)) or wirelessly (for example, infrared, radio, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

## Claims

1. A packet transmission method, wherein the method comprises:
establishing (S301), by a first proxy server, a multipath transmission control protocol, MPTCP, tunnel to a second proxy server, wherein the MPTCP tunnel comprises a plurality of transmission control protocol, TCP, connections; the method **characterised by** that it further comprises:
encapsulating (S302), by the first proxy server after receiving an internet protocol, IP, packet into which a user datagram protocol, UDP, packet is encapsulated, the IP packet with an MPTCP header; and
sending (S303), by the first proxy server by using the TCP connection in the MPTCP tunnel, the IP packet encapsulated with the MPTCP header.

2. The packet transmission method according to claim 1, wherein none of the plurality of TCP connections has an available window; and
the sending, by the first proxy server by using the TCP connection in the MPTCP tunnel, the IP packet encapsulated with the MPTCP header comprises:
calculating (S401), by the first proxy server, a ratio of current congestion windows of the plurality of TCP connections based on a quantity of current congestion windows of each TCP connection;
increasing (S402), by the first proxy server, a quantity of the current congestion windows of the plurality of TCP connections based on the ratio of the current congestion windows; and
sending (S403), by the first proxy server by using a TCP connection with an increased quantity of current congestion windows, the IP packet encapsulated with the MPTCP header.

3. The packet transmission method according to claim 2, wherein the sending, by the first proxy server by using a TCP connection with an increased quantity of current congestion windows, the IP packet encapsulated with the MPTCP header comprises:
determining, by the first proxy server based on priorities of the plurality of TCP connections, a TCP connection for sending the IP packet; and
sending, by the first proxy server by using the TCP connection for sending the IP packet, the IP packet encapsulated with the MPTCP header.

4. The packet transmission method according to claim 1, wherein the plurality of TCP connections have available windows; and
the sending, by the first proxy server by using the TCP connection in the MPTCP tunnel, the IP packet encapsulated with the MPTCP header comprises:
determining, by the first proxy server based on priorities of the TCP connections that have the available windows, a TCP connection for transmitting the IP packet; and
sending, by the first proxy server by using the TCP connection for transmitting the IP packet, the IP packet encapsulated with the MPTCP header.

5. The packet transmission method according to claim 1, wherein the encapsulating, by the first proxy server, the IP packet with an MPTCP header comprises:
when a length of the IP packet into which the UDP packet is encapsulated is greater than a maximum segment size MSS of the MPTCP tunnel, fragmenting, by the first proxy server based on the MSS, the IP packet into which the UDP packet is encapsulated, to obtain fragmented IP packets; and
encapsulating, by the first proxy server, the fragmented IP packets with MPTCP headers.

6. The packet transmission method according to claim 1, wherein the first proxy server is a hybrid access aggregation point HAAP, and the second proxy server is a home gateway.

7. The packet transmission method according to claim 1, wherein the first proxy server and the second proxy server are access routers of different enterprise networks.

8. The packet transmission method according to any one of claims 1 to 7, wherein the method further comprises:
when a packet loss occurs on a TCP connection for transmitting an IP packet, decreasing, by the first proxy server, a quantity of current congestion windows of the TCP connection on which the packet loss occurs.

9. A packet transmission method, wherein the method comprises:
establishing (S701), by a second proxy server, a multipath transmission control protocol, MPTCP, tunnel to a first proxy server, wherein the MPTCP tunnel comprises a plurality of transmission control protocol, TCP, connections; the method **characterised by** that it further comprises:
receiving (S702), by the second proxy server by using the TCP connection in the MPTCP tunnel, internet protocol, IP, packets encapsulated with MPTCP headers; wherein UDP packets are encapsulated in the IP packets; and
ranking (S703), by the second proxy server, the IP packets based on the MPTCP headers, and performing parsing based on IP packet headers of the IP packets to obtain the UDP packets.

10. The packet transmission method according to claim 9, wherein the performing parsing based on IP packet headers of the IP packets to obtain UDP packets comprises:
removing the MPTCP headers of the ranked IP packets to obtain fragmented IP packets; and
after reassembling the fragmented IP packets, performing parsing based on an IP packet header of a reassembled IP packet to obtain the UDP packet.

11. A proxy server, wherein the proxy server comprises an establishment module (901), an encapsulation module (902), and a sending module (903), wherein
the establishment module (901) is configured to establish a multipath transmission control protocol, MPTCP, tunnel to a second proxy server, wherein the MPTCP tunnel comprises a plurality of transmission control protocol, TCP, connections; the proxy server **characterised by** that:
the encapsulation module (902) is configured to encapsulate, after receiving an internet protocol, IP, packet into which a user datagram protocol, UDP, packet is encapsulated, the IP packet with an MPTCP header; and
the sending module (903) is configured to send, by using the TCP connection in the MPTCP tunnel, the IP packet encapsulated with the MPTCP header.

12. The proxy server according to claim 11, wherein none of the plurality of TCP connections has an available window; and
the sending module (903) is specifically configured to: calculate a ratio of current congestion windows of the plurality of TCP connections based on a quantity of current congestion windows of each TCP connection;
increase a quantity of the current congestion windows of the plurality of TCP connections based on the ratio of the current congestion windows; and
send, by using a TCP connection with an increased quantity of current congestion windows, the IP packet encapsulated with the MPTCP header.

13. The proxy server according to claim 12, wherein the sending module (903) is specifically configured to: determine, based on priorities of the plurality of TCP connections, a TCP connection for sending the IP packet; and send, by using the TCP connection for sending the IP packet, the IP packet encapsulated with the MPTCP header.

14. The proxy server according to claim 11, wherein the plurality of TCP connections have available windows; and
the sending module (903) is specifically configured to: determine, based on priorities of the TCP connections that have the available windows, a TCP connection for transmitting the IP packet; and send, by using the TCP connection for transmitting the IP packet, the IP packet encapsulated with the MPTCP header.

15. A proxy server, wherein the proxy server comprises an establishment module (1101), a receiving module (1102), and a parsing module (1103), wherein
the establishment module (1101) is configured to establish a multipath transmission control protocol, MPTCP, tunnel to a first proxy server, wherein the MPTCP tunnel comprises a plurality of transmission control protocol, TCP, connections; the proxy server **characterised by** that:
the receiving module (1102) is configured to receive, by using the TCP connection in the MPTCP tunnel, internet protocol, IP, packets encapsulated with MPTCP headers; wherein UDP packets are encapsulated in the IP packets; and
the parsing module (1103) is configured to rank the IP packets based on the MPTCP headers, and perform parsing based on IP packet headers of the IP packets to obtain the UDP packets.

## Patentansprüche

1. Paketübertragungsverfahren, wobei das Verfahren Folgendes umfasst:
Einrichten (S301), durch einen ersten Proxy-Server, eines Multipath Transmission Control Protocol, MPTCP, Tunnels zu einem zweiten Proxy-Server, wobei der MPTCP-Tunnel eine Vielzahl von Transmission Control Protocol, TCP, Verbindungen umfasst; wobei das Verfahren **dadurch gekennzeichnet ist, dass** es ferner Folgendes umfasst:
Einkapseln (S302) des IP-Pakets mit einem MPTCP-Header durch den ersten Proxy-Server nach dem Empfangen eines Internetprotokoll, IP, Pakets, in das ein Benutzerdatagrammprotokoll-Paket UDP eingekapselt ist; und
Senden (S303) durch den ersten Proxy-Server unter Verwendung der TCP-Verbindung in dem MPTCP-Tunnel, des mit dem MPTCP-Header eingekapselten IP-Pakets.

2. Paketübertragungsverfahren nach Anspruch 1, wobei keine der Vielzahl von TCP-Verbindungen ein verfügbares Fenster hat; und
das Senden durch den ersten Proxy-Server unter Verwendung der TCP-Verbindung in dem MPTCP-Tunnel, des mit dem MPTCP-Header eingekapselten IP-Pakets, umfasst:
Berechnen (S401), durch den ersten Proxy-Server, eines Verhältnisses aktueller Überlastungsfenster der Vielzahl von TCP-Verbindungen basierend auf einer Menge aktueller Überlastungsfenster jeder TCP-Verbindung;
Erhöhen (S402), durch den ersten Proxy-Server, einer Menge der aktuellen Überlastungsfenster der Vielzahl von TCP-Verbindungen basierend auf dem Verhältnis der aktuellen Überlastungsfenster; und
Senden (S403) des mit dem MPTCP-Header eingekapselten IP-Pakets durch den ersten Proxy-Server unter Verwendung einer TCP-Verbindung mit einer erhöhten Menge aktueller Überlastungsfenster.

3. Paketübertragungsverfahren nach Anspruch 2, wobei das Senden des mit dem MPTCP-Header eingekapselten IP-Pakets durch den ersten Proxy-Server unter Verwendung einer TCP-Verbindung mit einer erhöhten Menge aktueller Überlastungsfenster Folgendes umfasst:
Bestimmen einer TCP-Verbindung zum Senden des IP-Pakets durch den ersten Proxy-Server basierend auf Prioritäten der Vielzahl von TCP-Verbindungen; und
Senden des mit dem MPTCP-Header eingekapselten IP-Pakets durch den ersten Proxy-Server unter Verwendung der TCP-Verbindung zum Senden des IP-Pakets.

4. Paketübertragungsverfahren nach Anspruch 1, wobei die Vielzahl von TCP-Verbindungen verfügbare Fenster aufweist; und
das Senden durch den ersten Proxy-Server unter Verwendung der TCP-Verbindung in dem MPTCP-Tunnel, des mit dem MPTCP-Header eingekapselten IP-Pakets, umfasst:
Bestimmen, durch den ersten Proxy-Server, basierend auf Prioritäten der TCP-Verbindungen, die die verfügbaren Fenster aufweisen, einer TCP-Verbindung zum Übertragen des IP-Pakets; und
Senden des mit dem MPTCP-Header eingekapselten IP-Pakets durch den ersten Proxy-Server unter Verwendung der TCP-Verbindung zum Übertragen des IP-Pakets.

5. Paketübertragungsverfahren nach Anspruch 1, wobei das Einkapseln des IP-Pakets mit einem MPTCP-Header durch den ersten Proxy-Server Folgendes umfasst:
wenn eine Länge des IP-Pakets, in das das UDP-Paket eingekapselt ist, größer als eine maximale Segmentgröße (maximum segment size) MSS des MPTCP-Tunnels ist, Fragmentieren des IP-Pakets, in das das UDP-Paket eingekapselt ist, durch den ersten Proxy-Server basierend auf der MSS, um fragmentierte IP-Pakete zu erhalten; und
Einkapseln der fragmentierten IP-Pakete mit MPTCP-Headern durch den ersten Proxy-Server.

6. Paketübertragungsverfahren nach Anspruch 1, wobei der erste Proxy-Server ein Hybrid-Zugangs-Aggregationspunkt (hybrid access aggregation point) HAAP ist und der zweite Proxy-Server ein Heim-Gateway ist.

7. Paketübertragungsverfahren nach Anspruch 1, wobei der erste Proxy-Server und der zweite Proxy-Server Zugangsrouter verschiedener Unternehmensnetzwerke sind.

8. Paketübertragungsverfahren nach einem der Ansprüche 1 bis 7, wobei das Verfahren ferner Folgendes umfasst:
wenn ein Paketverlust auf einer TCP-Verbindung zum Übertragen eines IP-Pakets auftritt, Verringern einer Menge aktueller Überlastungsfenster der TCP-Verbindung, auf der der Paketverlust auftritt, durch den ersten Proxy-Server.

9. Paketübertragungsverfahren, wobei das Verfahren Folgendes umfasst:
Einrichten (S701), durch einen zweiten Proxy-Server, eines Multipath Transmission Control Protocol, MPTCP, Tunnels zu einem ersten Proxy-Server, wobei der MPTCP-Tunnel eine Vielzahl von Transmission Control Protocol, TCP, Verbindungen umfasst; wobei das Verfahren **dadurch gekennzeichnet ist, dass** es ferner Folgendes umfasst:
Empfangen (S702) durch den zweiten Proxy-Server unter Verwendung der TCP-Verbindung in dem MPTCP-Tunnel von Internetprotokoll, IP, Paketen, die mit MPTCP-Headern eingekapselt sind; wobei UDP-Pakete in den IP-Paketen eingekapselt sind; und
Einstufen (S703) der IP-Pakete basierend auf dem MPTCP-Header durch den zweiten Proxy-Server und Durchführen von Parsing basierend auf dem IP-Paket-Header der IP-Pakete, um die
UDP-Pakete zu erhalten.

10. Paketübertragungsverfahren nach Anspruch 9, wobei das Durchführen von Parsing basierend auf IP-Paket-Headern der IP-Pakete zum Erhalten von UDP-Paketen Folgendes umfasst:
Entfernen der MPTCP-Header der eingestuften IP-Pakete, um fragmentierte IP-Pakete zu erhalten; und
nach dem Wiederzusammensetzen der fragmentierten IP-Pakete, Durchführen von Parsing basierend auf einem IP-Paket-Header eines wiederzusammengesetzten IP-Pakets, um das UDP-Paket zu erhalten.

11. Proxy-Server, wobei der Proxy-Server ein Einrichtungsmodul (901), ein Einkapselungsmodul (902) und ein Sendemodul (903) umfasst, wobei
das Einrichtungsmodul (901) so konfiguriert ist, dass es einen Multipath Transmission Control Protocol, MPTCP, Tunnel zu einem zweiten Proxy-Server einrichtet, wobei der MPTCP-Tunnel eine Vielzahl von Transmission Control Protocol, TCP, Verbindungen umfasst; der Proxy-Server **dadurch gekennzeichnet, dass**:
das Einkapselungsmodul (902) so konfiguriert ist, dass es nach dem Empfangen eines Internetprotokoll, IP, Pakets, in das ein Benutzerdatagrammprotokoll, UDP, Paket eingekapselt ist, das IP-Paket mit einem MPTCP-Header einkapselt; und
das Sendemodul (903) so konfiguriert ist, dass es unter Verwendung der TCP-Verbindung im MPTCP-Tunnel das mit dem MPTCP-Header eingekapselte IP-Paket sendet.

12. Proxy-Server nach Anspruch 11, wobei keine der mehreren TCP-Verbindungen ein verfügbares Fenster aufweist; und
das Sendemodul (903) speziell konfiguriert ist zum: Berechnen eines Verhältnisses aktueller Überlastungsfenster der Vielzahl von TCP-Verbindungen basierend auf einer Menge aktueller Überlastungsfenster jeder TCP-Verbindung;
Erhöhen einer Menge der aktuellen Überlastungsfenster der Vielzahl von TCP-Verbindungen basierend auf dem Verhältnis der aktuellen Überlastungsfenster; und
Senden des mit dem MPTCP-Header eingekapselten IP-Pakets unter Verwendung einer TCP-Verbindung mit einer erhöhten Menge aktueller Überlastungsfenster.

13. Proxy-Server nach Anspruch 12, wobei das Sendemodul (903) speziell konfiguriert ist zum: Bestimmen einer TCP-Verbindung zum Senden des IP-Pakets basierend auf Prioritäten der Vielzahl von TCP-Verbindungen; und Senden, unter Verwendung der TCP-Verbindung zum Senden des IP-Pakets, des mit dem MPTCP-Header eingekapselten IP-Pakets.

14. Proxy-Server nach Anspruch 11, wobei die Vielzahl von TCP-Verbindungen verfügbare Fenster aufweist; und
das Sendemodul (903) speziell konfiguriert ist zum: Bestimmen einer TCP-Verbindung zum Übertragen des IP-Pakets basierend auf Prioritäten der TCP-Verbindungen, die die verfügbaren Fenster aufweisen; und Senden, unter Verwendung der TCP-Verbindung zum Übertragen des IP-Pakets, des mit dem MPTCP-Header eingekapselten IP-Pakets.

15. Proxy-Server, wobei der Proxy-Server ein Einrichtungsmodul (1101), ein Empfangsmodul (1102) und ein Parsing-Modul (1103) umfasst, wobei
das Einrichtungsmodul (1101) so konfiguriert ist, dass es einen Multipath Transmission Control Protocol, MPTCP, Tunnel zu einem ersten Proxy-Server einrichtet, wobei der MPTCP-Tunnel eine Vielzahl von Transmission Control Protocol, TCP, Verbindungen umfasst; der Proxy-Server **dadurch gekennzeichnet, dass**:
das Empfangsmodul (1102) so konfiguriert ist, dass es unter Verwendung der TCP-Verbindung in dem MPTCP-Tunnel Internetprotokoll, IP, Pakete empfängt, die mit MPTCP-Headern eingekapselt sind; wobei UDP-Pakete in den IP-Paketen eingekapselt sind; und
das Parsing-Modul (1103) so konfiguriert ist, dass es die IP-Pakete basierend auf den MPTCP-Headern einstuft und Parsing basierend auf den IP-Paket-Headern der IP-Pakete durchführt, um die UDP-Pakete zu erhalten.

## Revendications

1. Procédé de transmission de paquets, dans lequel le procédé comprend :
l'établissement (S301), par un premier serveur mandataire, d'un tunnel de protocole de commande de transmission par trajets multiples, MPTCP, vers un second serveur mandataire, dans lequel le tunnel MPTCP comprend une pluralité de connexions de protocole de commande de transmission, TCP ; le procédé étant **caractérisé en ce qu'**il comprend en outre :
l'encapsulation (S302), par le premier serveur mandataire après réception d'un paquet de protocole Internet, IP, dans lequel un paquet de protocole de datagramme utilisateur, UDP, est encapsulé, du paquet IP avec un en-tête MPTCP ; et
l'envoi (S303), par le premier serveur mandataire à l'aide de la connexion TCP dans le tunnel MPTCP, du paquet IP encapsulé avec l'en-tête MPTCP.

2. Procédé de transmission de paquets selon la revendication 1, dans lequel aucune de la pluralité de connexions TCP n'a de fenêtre disponible ; et
l'envoi, par le premier serveur mandataire à l'aide de la connexion TCP dans le tunnel MPTCP, du paquet IP encapsulé avec l'en-tête MPTCP, comprend :
le calcul (S401), par le premier serveur mandataire, d'un rapport de fenêtres de congestion actuelles de la pluralité de connexions TCP sur la base d'une quantité de fenêtres de congestion actuelles de chaque connexion TCP ;
l'augmentation (S402), par le premier serveur mandataire, d'une quantité des fenêtres de congestion actuelles de la pluralité de connexions TCP sur la base du rapport des fenêtres de congestion actuelles ; et
l'envoi (S403), par le premier serveur mandataire à l'aide d'une connexion TCP avec une quantité accrue de fenêtres de congestion actuelles, du paquet IP encapsulé avec l'en-tête MPTCP.

3. Procédé de transmission de paquets selon la revendication 2, dans lequel l'envoi, par le premier serveur mandataire à l'aide d'une connexion TCP avec une quantité accrue de fenêtres de congestion actuelles, du paquet IP encapsulé avec l'en-tête MPTCP comprend :
la détermination, par le premier serveur mandataire sur la base des priorités de la pluralité de connexions TCP, d'une connexion TCP pour envoyer le paquet IP ; et
l'envoi, par le premier serveur mandataire à l'aide de la connexion TCP pour envoyer le paquet IP, du paquet IP encapsulé avec l'en-tête MPTCP.

4. Procédé de transmission de paquets selon la revendication 1, dans lequel la pluralité de connexions TCP ont des fenêtres disponibles ; et
l'envoi, par le premier serveur mandataire à l'aide de la connexion TCP dans le tunnel MPTCP, du paquet IP encapsulé avec l'en-tête MPTCP, comprend :
la détermination, par le premier serveur mandataire sur la base des priorités des connexions TCP dont les fenêtres sont disponibles, d'une connexion TCP pour transmettre le paquet IP ; et
l'envoi, par le premier serveur mandataire à l'aide de la connexion TCP pour transmettre le paquet IP, du paquet IP encapsulé avec l'en-tête MPTCP.

5. Procédé de transmission de paquets selon la revendication 1, dans lequel l'encapsulation, par le premier serveur mandataire, du paquet IP avec un en-tête MPTCP comprend :
lorsqu'une longueur du paquet IP dans lequel le paquet UDP est encapsulé est supérieure à une taille maximale de segment MSS du tunnel MPTCP, la fragmentation, par le premier serveur mandataire sur la base de la MSS, du paquet IP dans lequel le paquet UDP est encapsulé, pour obtenir des paquets IP fragmentés ; et
l'encapsulation, par le premier serveur mandataire, des paquets IP fragmentés avec des en-têtes MPTCP.

6. Procédé de transmission de paquets selon la revendication 1, dans lequel le premier serveur mandataire est un point d'agrégation d'accès hybride, HAAP, et le second serveur mandataire est une passerelle domestique.

7. Procédé de transmission de paquets selon la revendication 1, dans lequel le premier serveur mandataire et le second serveur mandataire sont des routeurs d'accès de différents réseaux d'entreprise.

8. Procédé de transmission de paquets selon l'une quelconque des revendications 1 à 7, dans lequel le procédé comprend en outre :
lorsqu'un paquet est perdu sur une connexion TCP de transmission d'un paquet IP, la diminution, par le premier serveur mandataire, d'une quantité de fenêtres de congestion actuelles de la connexion TCP sur laquelle le paquet a été perdu.

9. Procédé de transmission de paquets, dans lequel le procédé comprend :
l'établissement (S701), par un second serveur mandataire, d'un tunnel de protocole de commande de transmission par trajets multiples, MPTCP, vers un premier serveur mandataire, dans lequel le tunnel MPTCP comprend une pluralité de connexions de protocole de commande de transmission, TCP ; le procédé étant **caractérisé en ce qu'**il comprend en outre :
la réception (S702), par le second serveur mandataire à l'aide de la connexion TCP dans le tunnel MPTCP, de paquets de protocole Internet, IP, encapsulés avec des en-têtes MPTCP ; dans lequel les paquets UDP sont encapsulés dans les paquets IP ; et
le classement (S703), par le second serveur mandataire, des paquets IP sur la base des en-têtes MPTCP, et la réalisation d'une analyse sur la base des en-têtes de paquets IP des paquets IP pour obtenir les paquets UDP.

10. Procédé de transmission de paquets selon la revendication 9, dans lequel la réalisation d'une analyse sur la base des en-têtes de paquets IP des paquets IP pour obtenir les paquets UDP comprend :
la suppression des en-têtes MPTCP des paquets IP classés pour obtenir des paquets IP fragmentés ; et
après réassemblage des paquets IP fragmentés, la réalisation d'une analyse sur la base d'un en-tête de paquet IP d'un paquet IP réassemblé pour obtenir le paquet UDP.

11. Serveur mandataire, dans lequel le serveur mandataire comprend un module d'établissement (901), un module d'encapsulation (902) et un module d'envoi (903), dans lequel
le module d'établissement (901) est configuré pour établir un tunnel de protocole de commande de transmission par trajets multiples, MPTCP, vers un second serveur mandataire, dans lequel le tunnel MPTCP comprend une pluralité de connexions de protocole de commande de transmission, TCP ; le serveur mandataire étant **caractérisé en ce que** :
le module d'encapsulation (902) est configuré pour encapsuler, après réception d'un paquet de protocole Internet, IP, dans lequel un paquet de protocole de datagramme utilisateur, UDP, est encapsulé, le paquet IP avec un en-tête MPTCP ; et
le module d'envoi (903) est configuré pour envoyer, à l'aide de la connexion TCP dans le tunnel MPTCP, le paquet IP encapsulé avec l'en-tête MPTCP.

12. Serveur mandataire selon la revendication 11, dans lequel aucune de la pluralité de connexions TCP n'a de fenêtre disponible ; et
le module d'envoi (903) est spécifiquement configuré pour : calculer un rapport de fenêtres de congestion actuelles de la pluralité de connexions TCP sur la base d'une quantité de fenêtres de congestion actuelles de chaque connexion TCP ;
augmenter une quantité des fenêtres de congestion actuelles de la pluralité de connexions TCP sur la base du rapport des fenêtres de congestion actuelles ; et
envoyer, à l'aide d'une connexion TCP avec une quantité accrue de fenêtres de congestion actuelles, le paquet IP encapsulé avec l'en-tête MPTCP.

13. Serveur mandataire selon la revendication 12, dans lequel le module d'envoi (903) est spécifiquement configuré pour : déterminer, sur la base des priorités de la pluralité de connexions TCP, une connexion TCP pour envoyer le paquet IP ; et envoyer, à l'aide de la connexion TCP pour envoyer le paquet IP, le paquet IP encapsulé avec l'en-tête MPTCP.

14. Serveur mandataire selon la revendication 11, dans lequel la pluralité de connexions TCP ont des fenêtres disponibles ; et
le module d'envoi (903) est spécifiquement configuré pour : déterminer, sur la base des priorités des connexions TCP dont les fenêtres sont disponibles, une connexion TCP pour transmettre le paquet IP ; et envoyer, à l'aide de la connexion TCP pour transmettre le paquet IP, le paquet IP encapsulé avec l'en-tête MPTCP.

15. Serveur mandataire, dans lequel le serveur mandataire comprend un module d'établissement (1101), un module de réception (1102) et un module d'analyse (1103), dans lequel
le module d'établissement (1101) est configuré pour établir un tunnel de protocole de commande de transmission par trajets multiples, MPTCP, vers un premier serveur mandataire, dans lequel le tunnel MPTCP comprend une pluralité de connexions de protocole de commande de transmission, TCP ; le serveur mandataire étant **caractérisé en ce que** :
le module de réception (1102) est configuré pour recevoir, à l'aide de la connexion TCP dans le tunnel MPTCP, des paquets de protocole Internet, IP, encapsulés avec des en-têtes MPTCP ; dans lequel les paquets UDP sont encapsulés dans les paquets IP ; et
le module d'analyse (1103) est configuré pour classer les paquets IP sur la base des en-têtes MPTCP, et effectuer une analyse sur la base des en-têtes de paquets IP des paquets IP pour obtenir les paquets UDP.
